# EUROPÄISCHE PATENTSCHRIFT

(11) **EP 1 105 437 B1**
(45) Veröffentlichungstag und Bekanntmachung des Hinweises auf die Patenterteilung: **03.11.2004**
(21) Anmeldenummer: 99941631.6
(22) Anmeldetag: 17.08.1999
(51) Int. Cl.: C08K 3/16, C08L 81/06, C08L 77/00

(54) **FORMMASSEN AUF DER BASIS VON POLYARYLENETHERSULFONEN UND ALIPHATISCHEN POLYAMIDEN**
MOULDING MATERIALS WITH A POLYARYLENE ETHER SULFONE AND ALIPHATIC POLYAMIDE BASE
MATIERES MOULABLES A BASE DE POLYARYLENETHERSULFONES ET DE POLYAMIDES ALIPHATIQUES

(30) Priorität: 28.08.1998 DE 19839331
(43) Veröffentlichungstag der Anmeldung: 13.06.2001
(73) Patentinhaber: BASF AKTIENGESELLSCHAFT, 67056 Ludwigshafen (DE)
(72) Erfinder: WEBER, Martin, D-67487 Mainkammer (DE); QUEISSER, Joachim, D-68165 Mannheim (DE); EICHENAUER, Ulrich, D-67459 Böhl-Iggelheim (DE)
(86) Internationale Anmeldenummer: PCT/EP1999/006013
(87) Internationale Veröffentlichungsnummer: WO 2000/012601

(56) Entgegenhaltungen:
- EP-A- 0 232 496
- EP-A- 0 390 277
- EP-A- 0 745 642
- EP-A- 0 796 879
- DE-A- 4 429 107
- DE-A- 19 645 131

## Beschreibung

Die vorliegende Erfindung betrifft Formmassen, die
A) mindestens ein Polyarylenethersulfon,
B) mindestens ein aliphatisches Polyamid,
C) mindestens einen Füllstoff sowie gewünschtenfalls darüber hinaus
D) einen oder eine Mischung unterschiedlicher schlagzähmodifizierender Kautschuke,
E) einen oder eine Mischung unterschiedlicher Zusatzstoffe enthalten, die sich dadurch auszeichnen, daß die Polyamide B eine Viskositätszahl von mindestens 180 ml/g (gemessen in 0,5 gew.-%iger Lösung in 96 gew.-%iger Schwefelsäure gemäß DIN 53 727) aufweisen und die Formmassen außerdem
F) 100 ppm bis 0,5 Gew.-%, bezogen auf das Gesamtgewicht von A bis E, eines Kupferhalogenids enthalten.

Darüber hinaus betrifft die vorliegende Erfindung ein Verfahren zur Herstellung der Formmassen sowie deren Verwendung zur Herstellung von Formteilen und die Formteile daraus.

Formmassen auf der Basis von Polyarylenethersulfonen und Polyamiden sind hinlänglich bekannt.

So waren in den DE-A 41 21 705 und 44 29 107 Mischungen offenbart, die neben Polyarylenethern teilaromatische Copolyamide enthalten. Die aus der erstgenannten Schrift bekannten Blends enthalten bevorzugt teilaromatische Copolyamide mit relativen Viskositäten im Bereich von 2,2 bis 5,0, was Viskositätszahlen im Bereich von 120 bis 400 ml/g entspricht. Die in der DE-A 44 29 107 beschriebenen Copolyamide haben bevorzugt Viskositätszahlen im Bereich von 100 bis 500, insbesondere von 110 bis 200 ml/g.
Blends aus Polyarylenethersulfonen und Polyamiden mit mindestens 50 Gew.-% Hexamethylenterephthalamideinheiten waren aus der EP-A 477 757 bekannt. Bevorzugt werden Blends aus diesen Polyamiden mit Viskositätszahlen von bis zu 140 ml/g (entspricht η_{red} 1,4 dl/g), da die Polyamide mit höheren Viskositäten (bis η_{red} 1,9 dl/g) sich nur schwer verarbeiten lassen. Die in den genannten Schriften beschriebenen Formmassen weisen zwar gute thermische Beständigkeiten auf, werden aber Formteile daraus über längere Zeiträume oberhalb von 150 °C beansprucht, fällt das Niveau der mechanischen Eigenschaften ab.

Formmassen auf der Basis von Polyarylenethern und Polyamiden mit verbesserter Klebefestigkeit und besserer Verträglichkeit gegenüber Füllstoffen und anderen Thermoplasten, die sich für die Herstellung thermostabiler Klebstoffe eignen, sind in der EP-A 513 488 beschrieben. Zu den bevorzugt einsetzbaren Polyamiden zählen auch aliphatische Polyamide wie Polyamid 6. Die Viskositäten der verwendbaren Polyamide liegt im Bereich von 120 bis 400 ml/g (entspricht ηᵣₑₗ von 2,0 bis 5,0). Die thermische Beständigkeit auch dieser Mischungen genügt manchen Anforderungen noch nicht.

Daher war es die Aufgabe der vorliegenden Erfindung die thermische Beständigkeit von Formmassen auf der Basis von Polyarylenethern und Polyamiden zu verbessern. Insbesondere sollten die daraus erhältlichen Formkörper Dauerbelastungen bei Temperaturen oberhalb von 150 °C überstehen, ohne daß sich ihre mechanischen Eigenschaften wesentlich verschlechtern. Gleichzeitig sollten die Formmassen noch möglichst leicht verarbeitbar sein. Sie sollten vor allem gute Fließfähigkeiten aufweisen. Eine weitere Anforderung an die Formmassen war, daß sie einfach und wirtschaftlich herstellbar sein sollten.

Diese Aufgabe wird von den eingangs definierten Formmassen, die im folgenden näher beschrieben sind, erfüllt.

### Komponente A

Der Anteil der Komponente A an den erfindungsgemäßen Formmassen kann in weiten Bereichen variieren. Bevorzugte erfindungsgemäße Formmassen enthalten die Komponente A in Mengen von 2 bis 97,8, insbesondere von 5 bis 94,8 Gew.-%, bezogen auf das Gesamtgewicht von A bis E. Besonders bevorzugte Formmassen enthalten von 7,5 bis 92,3 Gew.-%, bezogen auf das Gesamtgewicht von A bis E, der Komponente A.

Als Komponente A wird erfindungsgemäß ein Polyarylenethersulfon eingesetzt. Es können auch Mischungen aus zwei oder mehreren unterschiedlichen Polyarylenethersulfonen als Komponente A eingesetzt werden.

Die Arylengruppen der Polyarylenethersulfone A können gleich oder verschieden sein und unabhängig voneinander einen aromatischen Rest mit 6 bis 18 C-Atomen bedeuten. Beispiele geeigneter Arylenreste sind Phenylen, Biphenylen, Terphenylen, 1,5-Naphthylen, 1,6-Naphthylen, 1,5-Anthrylen, 9,10-Anthrylen oder 2,6-Anthrylen. Darunter werden 1,4-Phenylen und 4,4'-Biphenylen bevorzugt. Vorzugsweise sind diese aromatischen Reste nicht substituiert. Sie können jedoch einen oder mehrere Substituenten tragen. Geeignete Substituenten sind beispielsweise Alkyl-, Arylalkyl-, Aryl-, Nitro-, Cyano- oder Alkoxygruppen sowie Heteroaromaten wie Pyridin und Halogenatome. Zu den bevorzugten Substituenten zählen Alkylreste mit bis zu 10 Kohlenstoffatomen wie Methyl, Ethyl, i-Propyl, n-Hexyl, i-Hexyl, C₁- bis C₁₀-Alkoxyreste wie Methoxy, Ethoxy, n-Propoxy, n-Butoxy, Arylreste mit bis zu 20 Kohlenstoffatomen wie Phenyl oder Naphthyl sowie Fluor und Chlor. Des weiteren sind Substituenten bevorzugt, die durch Reaktion der Polyarylenethersulfone mit einer reaktiven Verbindung, die neben einer C,C-Doppel- oder Dreifachbindung eine bzw. mehrere Carbonyl-, Carbonsäure, Carboxylat-, Säureanhydrid, Säureamid-, Säureimid-, Carbonsäureester-, Amino-, Hydroxyl-, Epoxi-, Oxazolin-, Urethan-, Harnstoff-, Lactam- oder Halogenbenzylgruppe aufweist erhältlich sind. Die Arylengruppen der Polyarylenether können neben -SO₂-, z.B. über -O-, -S-. -SO-, -CO-, -N=N-, -COO-, einen Alkylenrest, der gewünschtenfalls substituiert sein kann, oder eine chemische Bindung miteinander verknüpft sein.

Bevorzugte erfindungsgemäß brauchbare Polyarylenethersulfone (Komponente A) sind aufgebaut aus wiederkehrenden Einheiten der Formel I 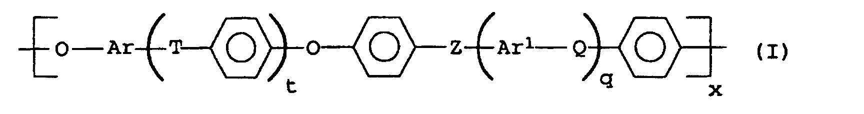 worin
- x: für 0,5 oder 1 steht,
- t: und q unabhängig voneinander für 0, 1, 2 oder 3 stehen,
- n: für eine ganze Zahl von 0 bis 6 steht,
- Q, T, Y und Z: unabhängig voneinander jeweils eine chemische Bindung oder eine Gruppe, ausgewählt unter -O-, -S-, -SO₂-, S=O, C=O, -N=N-, -R^{a}C=CR^{b}- und -CR^{c}R^{d-}, bedeuten, wobei
R^{a} und R^{b} unabhängig voneinander jeweils für ein Wasserstoffatom oder eine C₁-C₁₂-Alkylgruppe stehen und
R^{c} und R^{d} unabhängig voneinander jeweils für ein Wasserstoffatom oder eine C₁-C₁₂-Alkyl-, C₁-C₁₂-Alkoxy- oder C₆-C₁₈-Arylgruppe stehen, wobei R^{c} und R^{d} gegebenenfalls unabhängig voneinander mit Fluor- und/oder Chloratomen substituiert sind oder gegebenenfalls zusammen mit dem C-Atom an das sie gebunden sind, eine C₃-C₁₂-Cyclaalkylgruppe bilden, die gegebenenfalls mit einer oder mehreren C₁-C₆-Alkylgruppen substituiert ist,
mit der Maßgabe, daß mindestens eine der Gruppen T, Q und Z für -SO₂- oder C=O steht und, wenn t und q für 0 stehen, Z für -SO₂- steht,
- Ar, Ar¹, Ar² und Ar³: unabhängig voneinander für C₆-C₁₈-Arylengruppen stehen, wobei diese gegebenenfalls mit C₁-C₁₂-Alkyl-, C₆-C₁₈-Aryl-, C₁-C₁₂-Alkoxygruppen oder Halogenatomen substituiert sind,

Es können auch verschiedene Einheiten der Formel I statistisch oder in Blöcken verteilt im Polyarylenethersulfon vorliegen.

Die Herstellung erfindungsgemäß brauchbarer Polyarylenether A kann beispielsweise in Anlehnung an GB 1 152 035 und US 4,870,153 erfolgen, worauf hiermit ausdrücklich Bezug genommen wird. Geeignete Verfahrensbedingungen zur Synthese von Polyarylenethersulfonen sind beispielsweise in EP-A- 0 113 112 und EP-A- 0 135 130 beschrieben. Besonders geeignet ist die Umsetzung der Monomeren in aprotischen polaren Lösungsmitteln in Gegenwart von wasserfreiem Alkalicarbonat. Eine besonders bevorzugte Kombination ist N-Methylpyrrolidon als Lösungsmittel und Kaliumcarbonat als Katalysator. Die Umsetzung in der Schmelze ist ebenfalls bevorzugt. Die darin beschriebene Einführung von terminalen Anhydridgruppen ist für die vorliegende Erfindung jedoch nicht zwingend erforderlich. Beispiele für geeignete Polyarylenethersulfone A sind solche, mit mindestens einer der folgenden wiederkehrenden Struktureinheiten I₁ bis I₁₅:
für x=0,5 in Formel I: 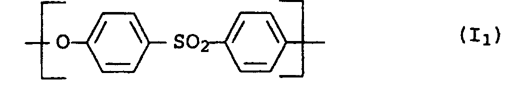 für x=1 in Formel I:

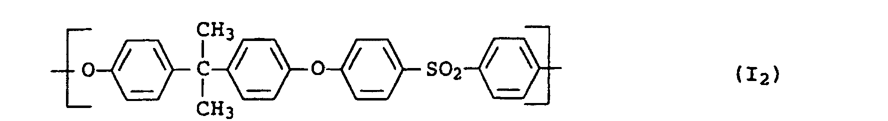

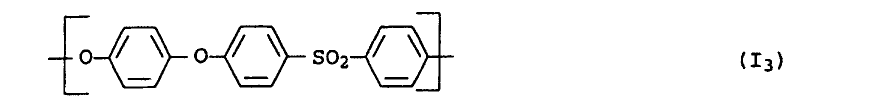

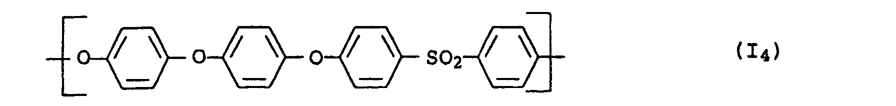

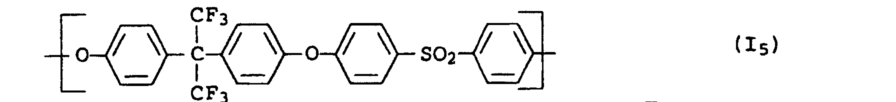

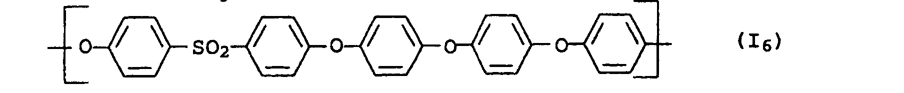

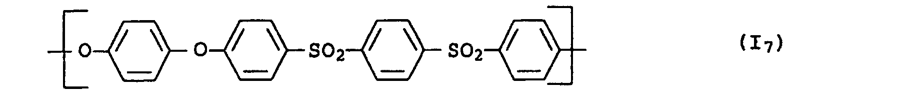

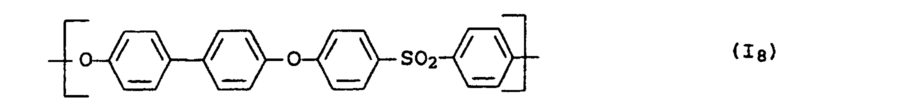

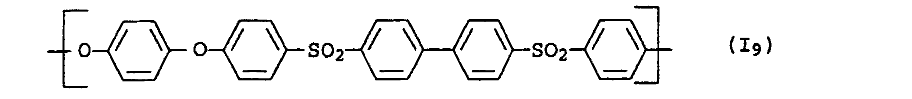

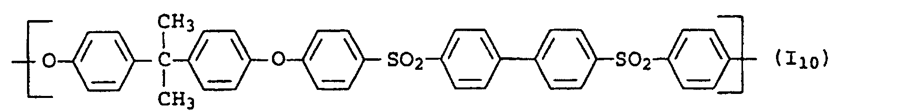

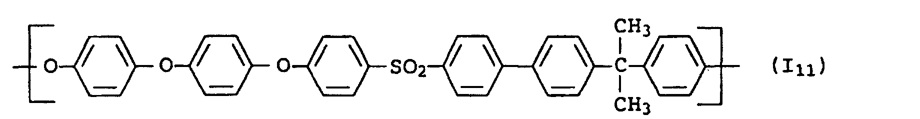

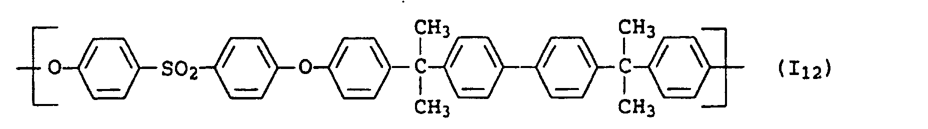

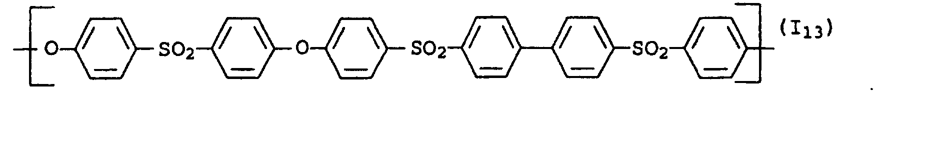

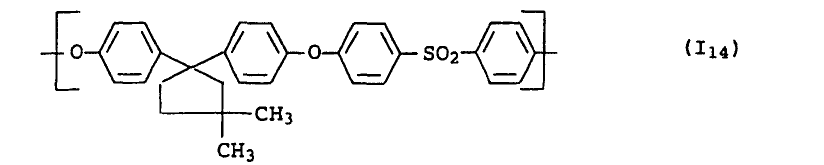

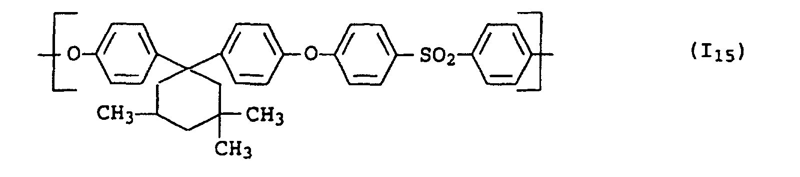

Als besonders bevorzugte Einheiten der Formel 1 sind zu nennen Einheiten der Formeln I₁ und I₂, welche einzeln oder im Gemisch vorliegen können.

Carboxylgruppen-haltige Polyarylenethersulfone mit wiederkehrenden Strukturelementen der Formeln I und II 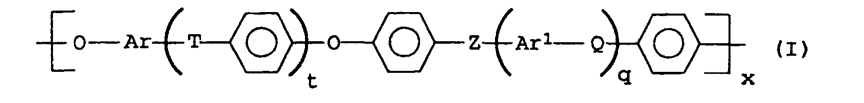 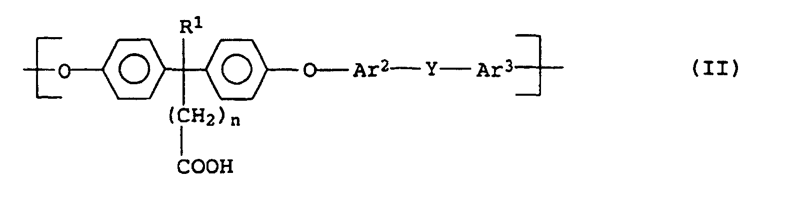 worin die Variablen die oben angegebenen Bedeutungen haben und
R¹ für H, C₁-C₆-Alkyl, oder -(CH₂)ₙ-COOH steht
zählen nach einer Ausführungsform zu den bevorzugten Polyarylenethersulfonen, insbesondere in Mischung mit Polyarylenethersulfonen, die inerte Gruppen enthalten.

Beispielsweise sind diese Carboxylgruppen enthaltenden Polyarylenether zugänglich in Anlehnung an die EP-A-0 185 237 sowie nach den von I.W. Parsons et al., in Polymer, 34, 2836 (1993) und T. Koch, H. Ritter, in Macromol. Phys. 195, 1709 (1994) beschriebenen Verfahren.

Beispiele für geeignete Strukturelemente II sind: 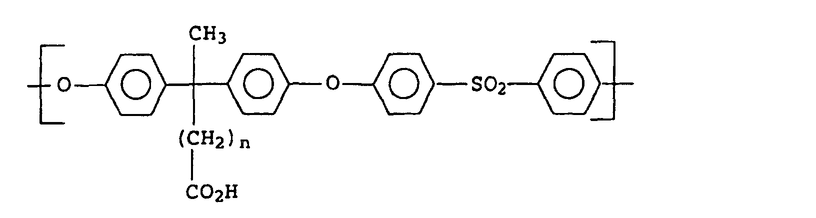 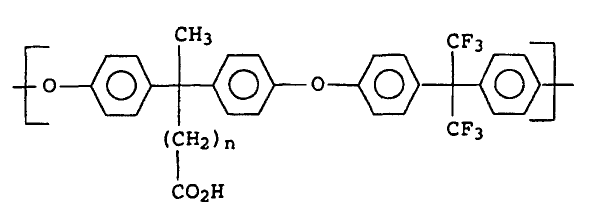 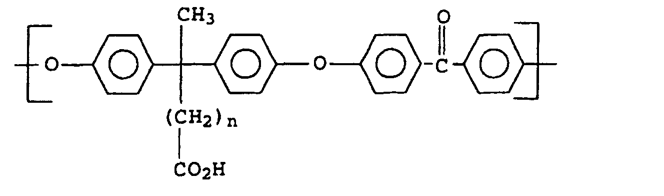 worin n jeweils für eine ganze Zahl von 0 bis 4 steht.

Die säuregruppenhaltigen Polyarylenethersulfone weisen Viskositätszahlen von etwa 15 bis 80 ml/g auf (bestimmt in 1%iger NMP-Lösung bei 25°C) . Wenn diese säuregruppenhaltigen Polyarylenethersulfone eingesetzt werden, beträgt der Anteil freier Säuregruppen in der Komponente A bevorzugt 0,05 bis 25, vorzugsweise 0,1 bis 20 und insbesondere 0,1 bis 15 Mol-%, wobei die Bestimmung des Anteils an Säuregruppen, wie bei I.W. Parsons et al., Polymer, 34, 2836 (1993) beschrieben, durch ¹H-NMR erfolgt.

Die Polyarylenethersulfone A können auch Co- oder Blockcopolymere sein, in denen Polyarylenethersulfonsegmente und Segmente von anderen thermoplastischen Polymeren, wie Polyestern, aromatischen Polycarbonaten, Polyestercarbonaten, Polysiloxanen, Polyimiden oder Polyetherimiden vorliegen. Die Molekulargewichte (Zahlenmittel) der Blöcke bzw. der Pfropfarme in den Copolymeren liegen in der Regel im Bereich von 1 000 bis 30 000 g/mol. Die Blöcke unterschiedlicher Struktur können alternierend oder statistisch angeordnet sein. Der Gewichtsanteil der Polyarylenethersulfone in den Co- oder Blockcopolymeren beträgt im allgemeinen mindestens 10 Gew.-%. Der Gewichtsanteil der Polyarylenethersulfone kann bis zu 97 Gew.-% betragen. Bevorzugt werden Co- oder Blockcopolymere mit einem Gewichtsanteil an Polyarylenethersulfonen mit bis zu 90 Gew.-%. Besonders bevorzugt werden Co- oder Blockcopolymere mit 20 bis 80 Gew.-% Polyarylenethersulfonen.

Im allgemeinen weisen die Polyarylenethersulfone mittlere Molekulargewichte Mₙ (Zahlenmittel) im Bereich von 5 000 bis 60 000 g/mol und relative Viskositäten von 0,20 bis 0,95 dl/g auf. Die relativen Viskositäten werden je nach Löslichkeit der Polyarylenethersulfone entweder in 1 gew.-%iger N-Methylpyrrolidon-Lösung, in Mischungen aus Phenol und Dichlorbenzol oder in 96%iger Schwefelsäure bei jeweils 20°C bzw. 25°C gemessen.

Je nach Synthesebedingungen können die Polyarylenethersulfone unterschiedliche Endgruppen aufweisen. Darunter sind solche, die sich gegenüber der Komponente B inert verhalten und solche, die mit funktionellen Gruppen der Polyamide B, insbesondere den Amino- und Carboxylgruppen reagieren können.

Zu den inerten Endgruppen zählen Halogen-, insbesondere Chlor-, Alkoxy-, vor allem Methoxy- oder Ethoxy-, Aryloxy- bevorzugt Phenoxy oder Benzyloxygruppen. Als Beispiele für reaktive Gruppen sind Hydroxy-, Amino-, Anhydrid-, Epoxy- oder Carboxylgruppen zu nennen. Darunter sind Polyarylenethersulfone mit Amino-, Anhydrid oder Epoxyendgruppen oder deren Mischungen besonders bevorzugt.

Polyarylenethersulfone A mit Hydroxyendgruppen können beispielsweise durch geeignete Wahl des molaren Verhältnisses zwischen Dihydroxy- und Dichlormonomeren hergestellt werden (siehe z.B. McGrath et al Polym. Eng. Sci. 17, 647 (1977); Elias "Makromoleküle 4. Aufl. (1981) Seiten 490 bis 493, Hütig & Wepf.-Verlag, Basel).

Polyarylenethersulfone A, die Aminoendgruppen aufweisen können z.B. dadurch erhalten werden, daß z.B. p-Aminophenol während der Polymerisation zugegen ist (J.E. Mc. Grath, Polymer 30, 1552 (1989).

Die Herstellung von Anhydridendgruppen enthaltenden Polyarylenethersulfone ist z.B. in der DE-A 44 29 107 beschrieben.

Polyarylenethersulfone mit Epoxidendgruppen lassen sich aus Polyarylenethersulfonen mit OH-Endgruppen herstellen. Hierzu können letztere beispielsweise mit geeigneten Verbindungen, die Propylenoxidgruppen aufweisen oder aus denen Propylenoxidgruppen zugänglich sind, bevorzugt Epichlorhydrin, umgesetzt werden.

Die Umsetzung der hydroxyterminierten Polyarylenethersulfone mit Epichlorhydrin findet bevorzugt bei Temperaturen im Bereich von 30 bis 200°C in einem Lösungsmittel statt. Als Lösungsmittel eignen sich dabei z.B. ein aliphatisches oder aromatisches Sulfid oder Sulfon oder auch N-Methylpyrrolidon. In der Regel wird die Reaktion in schwach basischem Milieu durchgeführt, um einer Ringöffnung der Epoxigruppen möglichst vorzubeugen.

Gemäß einer Ausführungsform enthalten die erfindungsgemäßen Formmassen Polyarylenethersulfone A, die im wesentlichen frei von reaktiven Endgruppen sind. Es können jedoch nach einer bevorzugten Ausführungsform auch Mischungen verschiedener Polyarylenethersulfone mit inerten und reaktiven Endgruppen eingesetzt werden. Der Anteil der Polyarylenethersulfone mit reaktiven Endgruppen kann von 2 bis 98, bevorzugt von 5 bis 50 Gew.-%, bezogen auf die Komponente A, betragen.

### Komponente B

Der Anteil der Komponente B an den erfindungsgemäßen Formmassen kann in weiten Bereichen variieren. Bevorzugte erfindungsgemäße Formmassen enthalten die Komponente B in Mengen von 2 bis 97,9, insbesondere von 5 bis 94,9 Gew.-%, bezogen auf das Gesamtgewicht von A bis E. Besonders bevorzugte Formmassen enthalten von 7,5 bis 92,4 Gew.-%, bezogen auf das Gesamtgewicht von A bis E, der Komponente B.

Als Komponente B wird erfindungsgemäß ein aliphatisches Polyamid eingesetzt. Es können auch Mischungen aus zwei oder mehreren unterschiedlichen aliphatischen Polyamiden als Komponente B eingesetzt werden. Erfindungsgemäß weisen die Polyamide B eine Viskositätszahl von mindestens 180 ml/g (gemessen in 0,5 gew.-%iger Lösung in 96 gew.-%iger Schwefelsäure gemäß DIN 53 727) auf. Bevorzugt werden Formmassen, in denen die Polyamide B eine Viskositätszahl von mindestens 190, bevorzugt mindestens 195, insbesondere größer als 200 ml/g, beispielsweise 205 ml/g oder darüber (gemessen wie oben) haben. Nach einer der bevorzugten Ausführungsformen kann die Viskositätszahl mehr als 230 ml/g (gemessen wie oben) betragen.

Aliphatische Polyamide sind an sich bekannt oder nach an sich bekannten Verfahren erhältlich.

Die Polyamide B können z.B. durch Kondensation äquimolarer Mengen einer gesättigten Dicarbonsäure mit 4 bis 16 Kohlenstoffatomen, mit einem gesättigten Diamin, welches bis 16 Kohlenstoffatome aufweist oder durch Kondensation von ω-Aminocarbonsäuren bzw. Polyaddition von entsprechenden Lactamen hergestellt werden.

Als geeignete Monomere dieser Typen seien hier nur Adipinsäure, Suberinsäure, Azelainsäure oder Sebacinsäure als Vertreter der aliphatischen Dicarbonsäuren, 1,4-Butandiamin, 1,5-Pentandiamin oder Piperazin, als Vertreter der Diamine und Caprolactam, Capryllactam, Önanthlactam, Laurinlactam und ω-Aminoundecansäure als Vertreter von Lactamen bzw. Aminocarbonsäuren genannt.

Geeignete Monomere sind des weiteren aliphatische cyclische Diamine wie die der Formel (III) 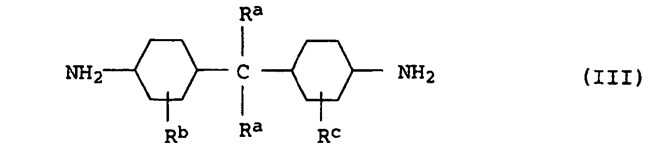 in der
- R^{a}: Wasserstoff oder eine C₁-C₄-Alkylgruppe,
- R^{b}: eine C₁-C₄-Alkylgruppe oder Wasserstoff und
- R^{c}: eine C₁-C₄-Alkylgruppe oder Wasserstoff bedeutet.

Besonders bevorzugte aliphatische cyclische Diamine sind Bis(4-aminocyclohexyl)-methan, Bis(4-amino-3-methylcyclohexyl)methan, Bis(4-aminocyclohexyl)-2,2-propan oder Bis(4-amino-3-methylcyclohexyl)-2,2-propan.

Als weitere aliphatische cyclische Diamine seien 1,3-, 1,4-Cyclohexandiamin oder Isophorondiamin genannt.

Nach einer der bevorzugten Ausführungsformen wird als Komponente B Polybutylenadipinsäureamid (Polyamid 4,6) eingesetzt. Nach einer anderen der bevorzugten Ausführungsformen wird Polyhexamethylenadipinsäureamid (Polyamid 6,6) oder Polycaprolactam (Polyamid 6) verwendet. Es ist aber auch möglich Mischungen aus zwei oder allen dieser vorstehend genannten Polyamide als Komponente B einzusetzen. Beispielsweise kann die Komponente B von 1 bis 99, bevorzugt von 10 bis 90 Gew.-%, bezogen auf das Gewicht der Komponente B, Polyamid 4,6 und von 1 bis 99, bevorzugt von 10 bis 90 Gew.-%, bezogen auf das Gewicht der Komponente B Polyamid 6,6 oder Polyamid 6 enthalten. Weiter bevorzugt ist es z.B. eine Mischung aus von 1 bis 99 Gew.-% Polyamid 6,6 und von 1 bis 99 Gew.-% Polyamid 6 als Komponente B einzusetzen, wobei sich die Gewichtsprozente auf das Gewicht der Komponente B beziehen.

### Komponente C

Neben den Komponenten A und B enthalten die erfindungsgemäßen Formmassen von 0,1 bis 60 Gew.-% Verstärkungsmittel oder Füllstoffe. Die erfindungsgemäßen Formmassen enthalten vorzugsweise 0,1 bis 55, insbesondere von 0,1 bis 50 Gew.-%, bezogen auf die Komponenten A bis E, faser- oder teilchenförmige Füllstoffe oder Verstärkungsstoffe oder deren Mischungen.

Bevorzugte faserförmige Füll- oder Verstärkungsstoffe sind Kohlenstoffasern, Kaliumtitanatwhisker, Aramidfasern und besonders bevorzugt Glasfasern. Bei der Verwendung von Glasfasern können diese zur besseren Verträglichkeit mit dem Matrixmaterial mit einer Schlichte, bevorzugt einer Polyurethanschlichte und einem Haftvermittler ausgerüstet sein. Im allgemeinen haben die verwendeten Kohlenstoff- und Glasfasern einen Durchmesser im Bereich von 6 bis 20 µm.

Die Einarbeitung der Glasfasern kann sowohl in Form von Kurzglasfasern als auch in Form von Endlossträngen (Rovings) erfolgen. Im fertigen Spritzgußteil liegt die mittlere Länge der Glasfasern vorzugsweise im Bereich von 0,08 bis 0,5 mm.

Kohlenstoff- oder Glasfasern können auch in Form von Geweben, Matten oder Glasseidenrovings eingesetzt werden.

Als teilchenförmige Füllstoffe eignen sich amorphe Kieselsäure, Carbonate wie Magnesiumcarbonat (Kreide), gepulverter Quarz, Glimmer, unterschiedlichste Silikate wie Tone, Muskovit, Biotit, Suzoit, Zinnmaletit, Talkum, Chlorit, Phlogophit, Feldspat, Calciumsilikate wie Wollastonit oder Aluminiumsilikate wie Kaolin, besonders kalzinierter Kaolin.

Nach einer besonders bevorzugten Ausführungsform werden teilchenförmige Füllstoffe verwendet, von denen mindestens 95 Gew.-%, bevorzugt mindestens 98 Gew.-% der Teilchen einen Durchmesser (größte Ausdehnung), bestimmt am fertigen Produkt, von weniger als 45 µm, bevorzugt weniger als 40 µm aufweisen und deren sogenanntes Aspektverhältnis im Bereich von 1 bis 25, bevorzugt im Bereich von 2 bis 20 liegt, bestimmt am fertigen Produkt.

Die Teilchendurchmesser können dabei z.B. dadurch bestimmt werden, daß elektronenmikroskopische Aufnahmen von Dünnschnitten der Polymermischung aufgenommen und mindestens 25, bevorzugt mindestens 50 Füllstoffteilchen für die Auswertung herangezogen werden. Ebenso kann die Bestimmung der Teilchendurchmesser über Sedimentationsanalyse erfolgen, gemäß Transactions of ASAE, Seite 491 (1983). Der Gewichtsanteil der Füllstoffe, deren Größe weniger als 40 µm beträgt kann auch mittels Siebanalyse gemessen werden. Das Aspektverhältnis ist das Verhältnis von Teilchendurchmesser zu Dicke (größter Ausdehnung zu kleinster Ausdehnung).

Besonders bevorzugt werden als teilchenförmige Füllstoffe Talkum, Kaolin, wie calcinierter Kaolin oder Wollastonit oder Mischungen aus zwei oder allen dieser Füllstoffe. Darunter wird Talkum mit einem Anteil von mindestens 95 Gew.-% an Teilchen mit einem Durchmesser von kleiner als 40 µm und einem Aspektverhältnis von 1,5 bis 25, jeweils bestimmt am fertigen Produkt, besonders bevorzugt. Kaolin hat bevorzugt einen Anteil von mindestens 95 Gew.-% an Teilchen mit einem Durchmesser von kleiner als 20 µm und ein Aspektverhältnis von 1,2 bis 20, jeweils bestimmt am fertigen Produkt.

### Komponente D

Optional können die erfindungsgemäßen Formmassen schlagzähmodifizierende Kautschuke D enthalten. Deren Anteil kann in weiten Bereichen variieren. Bevorzugte erfindungsgemäße Formmassen enthalten die Komponente D in Mengen von 0 bis 30, insbesondere von 0 bis 20 Gew.-%, bezogen auf das Gesamtgewicht von A bis F. Besonders bevorzugte Formmassen enthalten von 0 bis 17,5 Gew.-%, bezogen auf das Gesamtgewicht von A bis E, der Komponente D.

Als Komponente D können auch Mischungen aus zwei oder mehreren unterschiedlichen schlagzähmodifizierenden Kautschuken eingesetzt werden.

Kautschuke, die die Zähigkeit der Formmassen erhöhen, weisen im allgemeinen zwei wesentliche Merkmale auf: sie enthalten einen elastomeren Anteil, der eine Glasübergangstemperatur von weniger als -10°C, vorzugsweise von weniger als -30°C aufweist, und sie enthalten mindestens eine funktionelle Gruppe, die mit dem Polyamid bzw. Polyarylensulfon wechselwirken kann. Geeignete funktionelle Gruppen sind beispielsweise Carbonsäure-, Carbonsäureanhydrid-, Carbonsäureester-, Carbonsäureamid-, Carbonsäureimid-, Amino-, Hydroxyl-, Epoxid-, Urethan- oder Oxazolingruppen.

Bevorzugt werden als Komponente D funktionalisierte Kautschuke verwendet. Zu den bevorzugten funktionalisierten Kautschuken zählen funktionalisierte Polyolefinkautschuke, die aus folgenden Komponenten aufgebaut sind:
d₁) 40 bis 99 Gew.-% mindestens eines α-Olefins mit 2 bis 8 C-Atomen;
d₂) 0 bis 50 Gew.-% eines Diens;
d₃) 0 bis 45 Gew.-% eines C₁-C₁₂-Alkylesters der Acrylsäure oder Methacrylsäure oder Mischungen derartiger Ester;
d₄) 0 bis 40 Gew.-% einer ethylenisch ungesättigten C₂-C₂₀-Monooder Dicarbonsäure oder eines funktionellen Derivat einer solchen Säure;
d₅) 1 bis 40 Gew.-% eines Epoxygruppen enthaltenden Monomeren; und
d₆) 0 bis 5 Gew.-% sonstiger radikalisch polymerisierbarer Monomerer.

Als Beispiele für geeignete α-Olefine d₁) können Ethylen, Propylen, 1-Butylen, 1-Pentylen, 1-Hexylen, 1-Heptylen, 1-Octylen, 2-Methylpropylen, 3-Methyl-1-butylen und 3-Ethyl-1-butylen genannt werden, wobei Ethylen und Propylen bevorzugt sind.

Als geeignete Dien-Monomere d₂) seien beispielsweise konjugierte Diene mit 4 bis 8 C-Atomen, wie Isopren und Butadien, nichtkonjugierte Diene mit 5 bis 25 C-Atomen, wie Penta-1,4-dien, Hexa-1,4-dien, Hexa-1,5-dien, 2,5-Dimethylhexa-1,5-dien und Octa-1,4-dien, cyclische Diene, wie Cyclopentadien, Cyclohexadiene, Cyclooctadiene und Dicyclopentadien, sowie Alkenylnorbornene, wie 5-Ethyliden-2-norbornen, 5-Butyliden-2-norbornen, 2-Methallyl-5-norbornen, 2-Isopropenyl-5-norbornen und Tricyclodiene, wie 3-Methyltricyclo-(5.2.1.0.^{2,6})-3,8-decadien, oder deren Mischungen genannt. Bevorzugt werden Hexa-1,5-dien, 5-Ethylidennorbornen und Dicyclopentadien. Der Diengehalt beträgt vorzugsweise 0,5 bis 50, insbesondere 2 bis 20 und besonders bevorzugt 3 bis 15 Gew.-%, bezogen auf das Gesamtgewicht des Olefinpolymerisats.

Beispiele für geeignete Ester d₃) sind Methyl-, Ethyl-, Propyl-, n-Butyl, i-Butyl- und 2-Ethylhexyl-, Octyl- und Decylacrylate bzw. die entsprechenden Ester der Methacrylsäure. Von diesen werden Methyl-, Ethyl-, Propyl-, n-Butyl- und 2-Ethylhexylacrylat bzw. -methacrylat besonders bevorzugt.

Anstelle der Ester d₃) oder zusätzlich zu diesen können in den Olefinpolymerisaten auch säurefunktionelle und/oder latent säurefunktionelle Monomere ethylenisch ungesättigter Mono- oder Dicarbonsäuren d₄) enthalten sein.

Als Beispiele für Monomere d₄) seien Acrylsäure, Methacrylsäure, tertiäre Alkylester dieser Säuren, insbesondere tert.-Butylacrylat und Dicarbonsäuren, wie Maleinsäure und Fumarsäure, oder Derivate dieser Säuren sowie deren Monoester genannt.

Als latent säurefunktionelle Monomere sollen solche Verbindungen verstanden werden, die unter den Polymerisationsbedingungen bzw. bei der Einarbeitung der Olefinpolymerisate in die Formmassen freie Säuregruppen bilden. Als Beispiele hierfür seien Anhydride von Dicarbonsäuren mit 2 bis 20 C-Atomen, insbesondere Maleinsäureanhydrid und tertiäre C₁-C₁₂-Alkylester der vorstehend genannten Säuren, insbesondere tert.-Butylacrylat und tert.-Butylmethacrylat angeführt.

Ethylenisch ungesättigte Dicarbonsäuren und Anhydride d₄) sind darstellbar durch folgende allgemeine Formeln IV und V:

R²C(COOR³) = C(COOR⁴)R⁵ (IV)

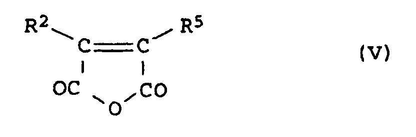

worin R², R³, R⁴ und R⁵ unabhängig voneinander für H oder C₁-C₆-Alkyl stehen.

Epoxygruppen tragende Monomere d₅) sind darstellbar durch folgende allgemeine Formeln VI und VII 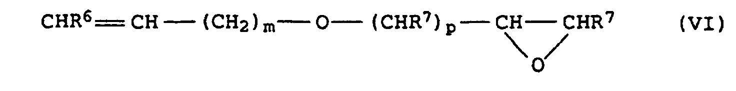 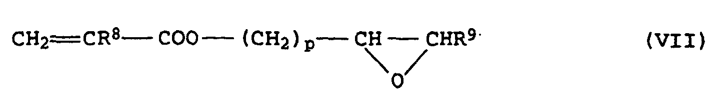 worin R⁶, R⁷, R⁸ und R⁹ unabhängig voneinander für H oder C₁-C₆-Al-kyl stehen, m eine ganze Zahl von 0 bis 20 und p eine ganze Zahl von 0 bis 10 ist.

Bevorzugt stehen R² bis R⁹ für Wasserstoff, m für den Wert 0 oder 1 und p für den Wert 1.

Bevorzugte Verbindungen d₄) bzw. d₅) sind Maleinsäure, Fumarsäure und Maleinsäureanhydrid bzw. Alkenylglycidylether und Vinylglycidylether.

Besonders bevorzugte Verbindungen der Formeln IV und V bzw. VI und VII sind Maleinsäure und Maleinsäureanhydrid bzw. Epoxygruppen-enthaltende Ester der Acrylsäure und/oder Methacrylsäure, insbesondere Glycidylacrylat und Glycidylmethacrylat.

Besonders bevorzugt sind Olefinpolymerisate aus
- 50 bis 98,9,: insbesondere 60 bis 94,85 Gew.-% Ethylen, und
- 1 bis 50: insbesondere 5 bis 40 Gew.-% eines Esters der Acryl- oder Methacrylsäure
- 0,1 bis 20,0,: insbesondere 0,15 bis 15 Gew.-% Glycidylacrylat und/oder Glycidylmethacrylat, Acrylsäure und/ oder Maleinsäureanhydrid.

Besonders geeignete funktionalisierte Kautschuke D sind Ethylen-Methylmethacrylat-Glycidylmethacrylat-, Ethylen-Methylacrylat-Glycidylmethacrylat-, Ethylen-Methylacrylat-Glycidylacrylat- und Ethylen-Methylmethacrylat-Glycidylacrylat-Polymere.

Als sonstige Monomere d₆) kommen z.B. Vinylester und Vinylether in Betracht.

Die Herstellung der vorstehend beschriebenen Polymere kann nach an sich bekannten Verfahren erfolgen, vorzugsweise durch statistische Copolymerisation unter hohem Druck und erhöhter Temperatur.

Der Schmelzindex der Copolymeren liegt im allgemeinen im Bereich von 1 bis 80 g/10 min (gemessen bei 190°C und 2,16 kg Belastung).

Als weitere Gruppe von geeigneten Kautschuken sind Kern-Schale-Pfropfkautschuke zu nennen. Hierbei handelt es sich um in Emulsion hergestellte Pfropfkautschuke, die aus mindestens einem harten und einem weichen Bestandteil bestehen. Unter einem harten Bestandteil versteht man üblicherweise ein Polymerisat mit einer Glasübergangstemperatur von mindestens 25°C, unter einem weichen Bestandteil ein Polymerisat mit einer Glasübergangstemperatur von höchstens 0°C. Diese Produkte weisen eine Struktur aus einem Kern und mindestens einer Schale auf, wobei sich die Struktur durch die Reihenfolge der Monomerenzugabe ergibt. Die weichen Bestandteile leiten sich i.a. von Butadien, Isopren, Alkylacrylaten, Alkylmethacrylaten oder Siloxanen und gegebenenfalls weiteren Comonomeren ab. Geeignete Siloxankerne können beispielsweise ausgehend von cyclischen oligomeren Octamethyltetrasiloxan oder Tetravinyltetramethyltetrasiloxan hergestellt werden. Diese können beispielsweise mit γ-Mercaptopropylmethyldimethoxysilan in einer ringöffnenden kationischen Polymerisation, vorzugsweise in Gegenwart von Sulfonsäuren, zu den weichen Siloxankernen umgesetzt werden. Die Siloxane können auch vernetzt werden, indem z.B. die Polymerisationsreaktion in Gegenwart von Silanen mit hydrolysierbaren Gruppen wie Halogen oder Alkoxygruppen wie Tetraethoxysilan, Methyltrimethoxysilan oder Phenyltrimethoxysilan durchgeführt wird. Als geeignete Comonomere sind hier z.B. Styrol, Acrylnitril und vernetzende oder pfropfaktive Monomere mit mehr als einer polymerisierbaren Doppelbindung wie Diallylphthalat, Divinylbenzol, Butandioldiacrylat oder Triallyl(iso)cyanurat zu nennen. Die harten Bestandteile leiten sich i.a. von Styrol, α-Methylstyrol und deren Copolymerisaten ab, wobei hier als Comonomere vorzugsweise Acrylnitril, Methacrylnitril und Methylmethacrylat aufzuführen sind.

Bevorzugte Kern-Schale-Pfropfkautschuke enthalten einen weichen Kern und eine harte Schale oder einen harten Kern, eine erste weiche Schale und mindestens eine weitere harte Schale. Der Einbau von funktionellen Gruppen wie Carbonyl-, Carbonsäure-, Säureanhydrid-, Säureamid-, Säureimid-, Carbonsäureester-, Amino-, Hydroxyl-, Epoxi-, Oxazolin-, Urethan-, Harnstoff-, Lactam- oder Halogenbenzylgruppen, erfolgt hierbei vorzugsweise durch den Zusatz geeignet funktionalisierter Monomere bei der Polymerisation der letzten Schale. Geeignete funktionalisierte Monomere sind beispielsweise Maleinsäure, Maleinsäureanhydrid, Mono- oder Diester oder Maleinsäure, tertiär-Butyl(meth-)acrylat, Acrylsäure, Glycidyl(meth-)acrylat und Vinyloxazolin. Der Anteil an Monomeren mit funktionellen Gruppen beträgt i.a. 0,1 bis 25 Gew.-%, vorzugsweise 0,25 bis 15 Gew.-%, bezogen auf das Gesamtgewicht des Kern-Schale-Pfropfkautschuks. Das Gewichtsverhältnis von weichen zu harten Bestandteilen beträgt i.a. 1:9 bis 9:1, bevorzugt 3:7 bis 8:2.

Derartige Kautschuke sind an sich bekannt und beispielsweise in der EP-A 208 187 beschrieben.

Eine weitere Gruppe von geeigneten Schlagzähmodifiern sind thermoplastische Polyester-Elastomere. Unter Polyesterelastomeren werden dabei segmentierte Copolyetherester verstanden, die langkettige Segmente, die sich in der Regel von Poly(alkylen)etherglycolen und kurzkettige Segmente, die sich von niedermolekularen Diolen und Dicarbonsäuren ableiten, enthalten. Derartige Produkte sind an sich bekannt und in der Literatur, z.B. in der US-A 3 651 014, beschrieben. Auch im Handel sind entsprechende Produkte unter den Bezeichnungen Hytrel® (Du Pont), Arnitel® (Akzo) und Pelprene® (Toyobo Co. Ltd.) erhältlich.

Selbstverständlich können auch Mischungen verschiedener Kautschuke eingesetzt werden.

### Komponente E

Die erfindungsgemäßen Formmassen können als Komponente E Zusatzstoffe wie Verarbeitungshilfsmittel oder Mischungen unterschiedlicher Additive enthalten.

Deren Anteil beträgt im allgemeinen bis zu 40, vorzugsweise von 0,1 bis zu 15 Gew.%, bezogen auf das Gesamtgewicht der Komponenten (A) bis (E).

Übliche Zusatzstoffe sind beispielsweise Stabilisatoren und Oxidationsverzögerer, Mittel gegen Wärmezersetzung und Zersetzung durch ultraviolettes Licht, Gleit- und Entformungsmittel, Farbstoffe und Pigmente und Weichmacher.

Pigmente und Farbstoffe sind allgemein in Mengen bis zu 6, bevorzugt 0,5 bis 5 und insbesondere 0,5 bis 3 Gew.-% enthalten.

Die Pigmente zur Einfärbung von Thermoplasten sind allgemein bekannt, siehe z.B. R. Gächter und H. Müller, Taschenbuch der Kunststoffadditive, Carl Hanser Verlag, 1983, S. 494 bis 510. Als erste bevorzugte Gruppe von Pigmenten sind Weißpigmente zu nennen. wie Zinkoxid, Zinksulfid, Bleiweiß (2 PbCO₃·Pb(OH)₂), Lithopone, Antimonweiß und Titandioxid. Von den beiden gebräuchlichsten Kristallmodifikationen (Rutil- und Anatas-Typ) des Titandioxids wird insbesondere die Rutilform zur Weißfärbung der erfindungsgemäßen Formmassen verwendet.

Schwarze Farbpigmente, die erfindungsgemäß eingesetzt werden können, sind Eisenoxidschwarz (Fe₃O₄), Spinellschwarz (Cu(Cr,Fe)₂O₄), Manganschwarz (Mischung aus Mangandioxid, Siliciumdioxid und Eisenoxid), Kobaltschwarz und Antimonschwarz sowie besonders bevorzugt Ruß, der meist in Form von Furnace- oder Gasruß eingesetzt wird (siehe hierzu G. Benzing, Pigmente für Anstrichmittel, Expert-Verlag (1988), S. 78ff).

Selbstverständlich können zur Einstellung bestimmter Farbtöne anorganische Buntpigmente wie Chromoxidgrün oder organische Buntpigmente wie Azopigmente und Phthalocyanine erfindungsgemäß eingesetzt werden. Derartige Pigmente sind allgemein im Handel 5 üblich.

Oxidationsverzögerer und Wärmestabilisatoren, die den thermoplastischen Massen gemäß der Erfindung zugesetzt werden können, sind z.B. Halogenide von Metallen der Gruppe I des Periodensystems, z.B. Natrium-, Kalium-, Lithium-Halogenide. Weiterhin können Zinkfluorid und Zinkchlorid verwendet werden. Ferner sind sterisch gehinderte Phenole, Hydrochinone, substituierte Vertreter dieser Gruppe, sekundäre aromatische Amine, gegebenenfalls in Verbindung mit phosphorhaltigen Säuren bzw. deren Salze, und Mi-5 schungen dieser Verbindungen, vorzugsweise in Konzentrationen bis zu 1 Gew.%, bezogen auf das Gewicht der Mischung, einsetzbar.

Beispiele für UV-Stabilisatoren sind verschiedene substituierte Resorcine, Salicylate, Benzotriazole und Benzophenone, die im allgemeinen in Mengen bis zu 2 Gew.% eingesetzt werden.

Gleit- und Entformungsmittel, die in der Regel in Mengen bis zu 1 Gew.% der thermoplastischen Masse zugesetzt werden, sind Stearinsäure, Stearylalkohol, Stearinsäurealkylester und -amide sowie Ester des Pentaerythrits mit langkettigen Fettsäuren. Es können auch Salze des Calciums, Zinks oder Aluminiums der Stearinsäure sowie Dialkylketone, z.B. Distearylketon, eingesetzt werden.

Unter den Zusatzstoffen sind auch Stabilisatoren, die die Zersetzung des roten Phosphors, der als Flammschutzmittel eingesetzt werden kann, in Gegenwart von Feuchtigkeit und Luftsauerstoff verhindern. Als Beispiele seien Verbindungen des Cadmiums, Zinks, Aluminiums, Zinns, Magnesiums, Mangans und Titans genannt. Besonders geeignete Verbindungen sind z.B. Oxide der genannten Metalle, ferner Carbonate oder Oxicarbonate, Hydroxide sowie Salze organischer oder anorganischer Säuren wie Acetate oder Phosphate bzw. Hydrogenphosphate.

Als weitere Zusatzstoffe kommen Nukleierungsmittel wie Talkum in Betracht.

### Komponente F

Der Anteil der Komponente F an den erfindungsgemäßen Formmassen beträgt von 100 ppm bis 0,5 Gew.-%, insbesondere von 200 ppm bis 0,4 Gew.-% bezogen auf das Gesamtgewicht von A bis E. Besonders bevorzugte Formmassen enthalten von 500 ppm bis 0,35 Gew.-%, bezogen auf das Gesamtgewicht von A bis E, der Komponente F.

Als Komponente F wird erfindungsgemäß Kupferbromid oder Kupferjodid oder deren Mischungen eingesetzt. Bevorzugt wurde Kupferjodid verwendet.

Besonders bevorzugt wird die Komponente F als alleiniges Halogenid verwendet, d.h. die unter der Komponente E genannten Halogenide sind bevorzugt nicht in den erfindungsgemäßen Formmassen enthalten.

Die erfindungsgemäßen Formmassen können nach an sich bekannten Verfahren, beispielsweise Extrusion, hergestellt werden.

Die Formmassen können z.B. hergestellt werden, indem man die Ausgangskomponenten in üblichen Mischvorrichtungen wie Schneckenextrudern, vorzugsweise Zweischneckenextrudern, Brabender-Mühlen oder Banbury-Mühlen sowie Knetern mischt und anschließend extrudiert. Üblicherweise wird das Extrudat nach der Extrusion abgekühlt und zerkleinert.

Die Reihenfolge der Mischung der Komponenten kann variiert werden, so können zwei oder ggf. drei Komponenten vorgemischt werden, es können aber auch alle Komponenten gemeinsam gemischt werden.

Besonders bevorzugt ist es, eine Vormischung aus den Komponenten B und F herzustellen und diese mit den anderen Komponenten zu mischen. Bevorzugt wird eine Schmelze der Vormischung zu der Schmelze der übrigen Komponenten zudosiert.

Um eine möglichst homogene Formmasse zu erhalten, ist eine intensive Durchmischung vorteilhaft. Dazu sind im allgemeinen mittlere Mischzeiten von 0,2 bis 30 Minuten bei Temperaturen von 280 bis 380°C erforderlich.

Die erfindungsgemäßen Formmassen zeichnen sich vor allem durch ihre Wärmealterungsbeständigkeit über lange Zeiträume aus. Außerdem sind sie sehr gut fließfähig. Sie eignen sich zur Herstellung von Formteilen. Die erfindungsgemäßen Formmassen eignen sich insbesondere für die Herstellung von Formteilen im Fahrzeugsektor, insbesondere im Automobilbereich. Beispielhaft sind Saugrohre, Wasserkästen, Gehäuse, Lüftungsrohre, Befestigungsteile, Manschetten oder Lüfterräder zu nennen.

### Beispiele

### Untersuchungsmethoden:

Die Viskositätszahl (VZ [ml/g]) der Polyarylenether wurde in 1 gew.-% iger Lösung von N-Methylpyrrolidon bei 25 °C ermittelt.

Die Viskosiätszahl (VZ [ml/g]) der Polyamide wurde nach DIN 53 727 an 0,5 gew-% iger Lösung in 96 gew-%iger Schwefelsäure bei 25 °C bestimmt.

Der Anteil der Säuregruppen in den Copolyarylenethern wurde wie bei I.W. Parsons et. al., Polymer 34, 2836 (1993) beschrieben, durch ¹H-NMR-Spektroskopie bestimmt.

Die Glasübergangstemperatur und der Schmelzpeak wurden anhand von DSC-Messungen von Proben im zweiten Aufheizcyclus bei einer Aufheizrate von 20 K/min bestimmt.

Die Wärmeformbeständigkeit der Proben wurde mittels der Vicat-Erweichungstmepratur (Vicat B [°C]) ermittelt. Diese wurde nach DIN 53 460 mit einer Kraft von 49,05 N und einer Temperatursteigerung von 50 K/h an Normkleinstäben ermittelt.

Die Schlagzähigkeit (aₙ [kJ/m²] wurde an ISO-Stäben 179 leU bestimmt (Mittelwert aus 10 Messungen). Der Schlag wurde "edgewise" durchgeführt.

Die Steifigkeit (E-Modul) wurde bei einer Abzugsgeschwindigkeit von 10 mm/min bei verstärkten Proben bzw. 50 mm/min bei unverstärkten Proben nach DIN 53 457 bestimmt (Mittelwert aus 10 Messungen).

Die Reißfestigkeit (σ_{zR} [kN/mm²] ) und die Reißdehnung (ε_{zR} [%]) wurden nach DIN 53 455 bei einer Abzugsgeschwindigkeit von 10 mm/min gemessen (jeweils Mittelwert aus 10 Messungen).

Die Fließfähigkeit (MVI [ml/10]) wurde nach DIN 53 735 bei 300°C und einer Belastung von 10 kg bestimmt (Mittelwert aus 3 Messungen).

Als Maß für die thermische Beständigkeit von verstärkten Proben wurde die prozentuale Änderung der Reißfestigkeiten (ermittelt über Zugversuch nach DIN 53 455 bei einer Abzugsgeschwindigkeit von 10 mm/min, Mittelwert aus 10 Messungen) vor und nach der Lagerung von Zugstäben (Höhe x Breite x Länge x Dicke: 4x20x170x4 mm) bei 180 °C nach 100, 500 und 1000 h ermittelt.

Als Maß für die thermische Beständigkeit von unverstärkten Proben wurde die prozentuale Änderung der Durchstoßarbeit (ermittelt nach DIN 53 443 bei einer Geschwindigkeit von 4,5 m/s) vor und nach Lagerung von Rundscheiben (60 mm x 2 mm) bei 150 °C nach 100, 500 und 1000 h bestimmt.

### Herstellung der Formmassen

### Komponente A1

Als Polyarylenethersulfon A1 wurde eines mit wiederkehrenden Einheiten der Formel I₁ verwendet, Ultrason® E 2010, Handelsprodukt der BASF AG. Dieses Produkt ist charakterisiert durch eine Viskositätszahl von 54 ml/g, gemessen in 1 %-iger NMP-Lösung bei 25°C.

### Komponente BV1

Als Polyamid BV1 wurde ein teilaromatisches Copolyamid, kondensiert aus 55 Gew.-Teilen Terephthalsäure, 35 Gew.-Teilen ε-Caprolactam und 38,5 Teilen Hexamethylendiamin, charakterisiert durch eine Viskositätszahl von 210 ml/g. Dieses Produkt ist des weiteren durch eine Glasstufe bei 110°C und einen Schmelzpeak bei 289°C charakterisiert.

### Komponente B1

Als Polyamid B1 wurde ein Polyamid 6, erhalten aus ε-Caprolactam mit einer Viskositätszahl von 250 ml/g verwendet (Ultramid®B4, Handelsprodukt der BASF AG).

### Komponente B2

Als Polyamid B2 wurde ein Polyamid 6,6 erhalten aus Hexamethylendiamin und Adipinsäure, mit einer Viskositätszahl von 205 ml/g verwendet (Ultramid® A4, Handelsprodukt der BASF AG).

### Komponente BV2

Als Polyamid BV2 wurde ein teilaromatisches Copolyamid, kondensiert aus 55 Gew.-Teilen Terephthalsäure, 35 Gew.-Teilen ε-Caprolactam und 38,5 Teilen Hexamethylendiamin, charakterisiert durch eine Viskositätszahl von 130 ml/g. Dieses Produkt ist des weiteren durch eine Glasstufe bei 110°C und einen Schmelzpeak bei 289°C charakterisiert.

### Komponente BV3

Als Polyamid BV3 wurde ein Polyamid 6, erhalten aus ε-Caprolactam, mit einer viskositätszahl von 150 ml/g verwendet, (Ultramid® B3, Handelsprodukt der BASF AG)

### Komponente BV4

Als Polyamid BV4 wurde ein Polyamid 6,6, erhalten aus Hexamethylendiamin und Adipinsäure, mit einer Viskositätszahl von 160 ml/g verwendet.

### Komponente A2

Unter Stickstoffatmosphäre wurden 5,742 kg Dichlordiphenylsulfon, 5,076 kg Dihydroxydiphenylsulfon und 305,8 g 4,4'-Di-hydroxyvaleriansäure in 29 kg N-Methylpyrrolidon gelöst und mit 2,820 kg wasserfreiem Kaliumcarbonat versetzt. Die Reaktionsmischung wurde bei einem Druck von 300 mbar unter ständigem Abdestillieren des Reaktionswassers und N-Methylpyrrolidon zunächst 1 h auf 180°C erhitzt und dann 6 h bei 190°C weiter umgesetzt.

Nach Zugabe von 40 kg N-Methylpyrrolidon wurden die anorganischen Bestandteile abfiltriert. Durch Zugabe von 300 ml Eisessig wurden basische Gruppen neutralisiert, anschließend wurde das Polymere durch Fällung in Wasser isoliert. Nach 3-maliger Extraktion mit Wasser wurde das Produkt bei 140°C im Vakuum getrocknet. Es wurde ein weißes Pulver erhalten.

Der Anteil an Einheiten mit Säuregruppen wurde mittels H-NMR zu 3,0 mol-% bestimmt, die Viskositätszahl des Produkts betrug 40,2 ml/g.

### Komponente A3

Unter Stickstoffatmosphäre wurden 4,593 kg Dichlordiphenylsulfon, 4,002 kg Dihydroxydiphenylsulfon in 29 kg N-Methylpyrrolidon gelöst und mit 2,923 kg wasserfreiem Kaliumcarbonat versetzt.

Die Reaktionsmischung wurde bei einem Druck von 300 mbar unter ständigem Abdestillieren des Reaktionswassers und N-Methylpyrrolidon zunächst 1 h auf 180°C erhitzt und dann 6 h bei 190°C weiter umgesetzt.

Nach dieser Zeit wurden 235 g 4-Fluorphthalsäureanhydrid der Mischung zugesetzt und die Reaktion 0,2 h bei 190°C weitergeführt.

Nach Zugabe von 40 kg N-Methylpyrrolidon wurden die anorganischen Bestandteile abfiltriert, anschließend wurde das Polymere durch Fällung in Wasser isoliert. Nach 3-maliger Extraktion mit Wasser wurde das Produkt bei 160°C im Vakuum getrocknet. Es wurde ein weißes Material erhalten.

Der Gehalt an Phthalsäureanhydridendgruppen betrug 0,83 Gew.-%, die Viskositätszahl des Polyarylenethers betrug 49,7 ml/g.

### Komponente C1

Schnittglasfaser mit Polyurethanschlichte, Faserdurchmesser 10 µm.

### Komponente C2

Talkum (z.B. IT-Extra® der Firma Norwegian Talc)

### Komponente D1

Ethylen-Propylen-Kautschuk, der mit 0,7 Gew.-% Maleinsäure/Maleinsäureanhydrid modifiziert ist und einen MFI-Wert von 3g/10' (gemessen bei 230°C und einer Belastung von 216 kg) aufweist.

### Komponente F: Kupferjodid

Es wurde eine Vormischung aus der jeweiligen B-Komponente und Kupferjodid hergestellt. Diese wurde zu den anderen Komponenten gegeben.

Die Komponenten wurden in einem Zweiwellenextruder bei einer Massetemperatur von 300 bis 350°C gemischt. Die Schmelze wurde durch ein Wasserbad geleitet und granuliert.

Die Formmassen wurden bei 340°C verarbeitet. Die Formtemperatur war jeweils 100°C.

Die Zusammensetzung der Formmassen und die Ergebnisse der Prüfungen sind in den Tabellen 1 und 2 aufgeführt.

**Tabelle 1:**

| Formmasse | V1 | V2 | 1 | V3 | 2 | V4 | 3 | 4 | 5 |
|---|---|---|---|---|---|---|---|---|---|
| Zusammensetzung: | | | | | | | | | |
| A1 | 49 | 49 | 49 | 49 | 49 | 49 | 42 | 35 | 42 |
| A2 | - | - | - | - | - | - | 7 | 14 | - |
| A3 | - | - | - | - | - | - | - | - | 7 |
| B1 | - | - | 20,99 | - | - | - | 20,99 | 20,99 | 20,99 |
| B2 | - | - | - | - | 20,99 | - | - | - | - |
| BV1 | 20,99 | - | - | - | - | - | - | - | - |
| BV2 | - | 20,99 - | - | - | - | - | - | - | - |
| BV3 | - | - | - | 20, 99 - | - | - | - | - | - |
| BV4 | - | - | - | - | - | 20,99 | - | - | - |
| C1 | 30 | 30 | 30 | 30 | 30 | 30 | 30 | 30 | 30 |
| F | 0,01 | 0,01 | 0,01 | 0,01 | 0,01 | 0,01 | 0,01 | 0,01 | 0,01 |

| Eigenschaften: | | | | | | | | | |
|---|---|---|---|---|---|---|---|---|---|
| Vicat B [°C] | 206 | 206 | 202 | 202 | 204 | 203 | 202 | 203 | 202 |
| aₙ [kJ/m²] | 51 | 47 | 53 | 48 | 51 | 48 | 58 | 65 | 64 |
| E-Modul [kN/mm²] | 11,7 | 11,7 | 11,8 | 11,8 | 12,1 | 12,0 | 11,8 | 11,7 | 11,8 |
| MVI [ml/10'] | 24 | 28 | 32 | 38 | 26 | 31 | 29 | 28 | 26 |

| ΔReißfestigkeit [%] | | | | | | | | | |
|---|---|---|---|---|---|---|---|---|---|
| Nach 100h | 96 | 94 | 97 | 91 | 95 | 91 | 96 | 96 | 96 |
| Nach 250h | 87 | 56 | 90 | 54 | 88 | 61 | 92 | 92 | 91 |
| Nach 1000h | 83 | 43 | 89 | 41 | 86 | 54 | 91 | 91 | 90 |

**Tabelle 2:**

| Formmasse | 6 | V5 | 7 | 8 | 9 |
|---|---|---|---|---|---|
| Zusammensetzung: | | | | | |
| A1 | 70 | 70 | 63 | 56 | 63 |
| A2 | - | - | 7 | 14 | - |
| A3 | - | - | - | - | 7 |
| B1 | 24,99 | - | 24,99 | 24,99 | 24,99 |
| BV3 | - | 24,99 | - | - | - |
| C2 | 0,1 | 0, 1 | 0,1 | 0, 1 | 0,1 |
| D1 | 5 | 5 | 5 | 5 | 5 |
| F | 0,01 | 0,01 | 0,01 | 0,01 | 0,01 |

| Eigenschaften: | | | | | |
|---|---|---|---|---|---|
| vicat B [°C] | 202 | 202 | 201 | 201 | 202 |
| ak [kJ/m²] | 6,5 | 5,9 | 11,4 | 15,1 | 21,1 |
| MVI [ml/10'] | 16 | 19 | 14 | 12 | 10 |

| ΔDurchstoßarbeit [%] | | | | | |
|---|---|---|---|---|---|
| Nach 100h | 87 | 77 | 89 | 90 | 91 |
| Nach 250h | 74 | 41 | 85 | 87 | 90 |
| Nach 1000h | 61 | 12 | 76 | 80 | 82 |

Die erfindungsgemäßen thermoplastischen Formmassen weisen sehr gute mechanische Eigenschaften sowie deutlich verbesserte thermische Beständigkeit auf.

## Patentansprüche

1. Formmassen, enthaltend
A) mindestens ein Polyarylenethersulfon,
B) mindestens ein aliphatisches Polyamid,
C) mindestens einen Füllstoff sowie gewünschtenfalls darüber hinaus
D) einen oder eine Mischung unterschiedlicher schlagzähmodifizierender Kautschuke
E) einen oder eine Mischung unterschiedlicher Zusatzstoffe **dadurch gekennzeichnet, daß** die Polyamide B eine Viskositätszahl von mindestens 180 ml/g (gemessen in 0,5 gew.-%iger Lösung in 96 gew.-%iger Schwefelsäure gemäß DIN 53 727) aufweisen und die Formmassen
F) 100 ppm bis 0,5 Gew.-%, bezogen auf das Gesamtgewicht von A bis E, Kupferbromid oder Kupferjodid oder deren Mischungen enthalten.

2. Formmassen nach Anspruch 1 worin die Polyarylenethersulfone A
a₁) 0 bis 100 Mol-% wiederkehrende Einheiten 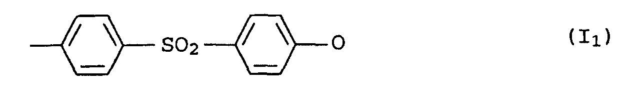 und
a₂) 0 bis 100 Mol-% wiederkehrende Einheiten 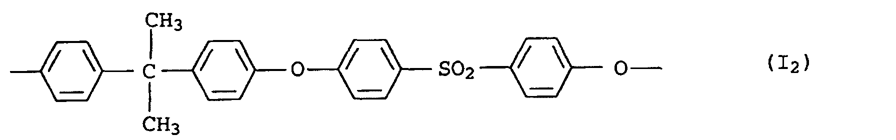
enthalten.

3. Formmassen nach Anspruch 1 oder 2, worin A eine Mischung aus mindestens einem Polyarylenethersulfon mit Gruppen, die sich gegenüber den Polyamiden B inert verhalten (a1) und mindestens einem Polyarylenethersulfon, das funktionelle Gruppen enthält, die mit den Gruppen der Polyamide B reagieren können (a2) ist.

4. Formmassen nach Anspruch 3 worin die funktionellen Gruppen der Polyarylenethersulfone a2 Anhydrid-, Carboxyl-, Epoxidoder Aminogruppen oder Mischungen davon sind.

5. Formmassen nach den Ansprüchen 1 bis 4, worin das Polyamid B Polybutylenadipinsäureamid, Polyhexamethylenadipinsäureamid oder Polycaprolactam oder eine Mischung aus zwei oder allen dieser Polyamide ist.

6. Verfahren zur Herstellung von Formmassen gemäß den Ansprüchen 1 bis 5 durch Mischen der Komponenten und anschließende Aufarbeitung, **dadurch gekennzeichnet, daß** man in einem ersten Schritt eine Mischung aus den Komponenten B und F herstellt und diese in einem zweiten Schritt mit den anderen Komponenten mischt.

7. Verwendung der Formmassen gemäß den Ansprüchen 1 bis 5 zur Herstellung von Formteilen.

8. Formteile, erhältlich aus den Formmassen gemäß den Ansprüchen 1 bis 5.

## Claims

1. A molding composition comprising
A) at least one polyarylene ether sulfone,
B) at least one aliphatic polyamide,
C) at least one filler,
and also if desired
D) an impact-modifying rubber or a mixture of various impact-modifying rubbers, and
E) an additive or a mixture of various additives
wherein the viscosity number of the polyamides B (measured in 0.5% strength by weight solution in 96% strength by weight sulfuric acid to DIN 53 727) is at least 180 ml/g, and the molding composition comprises
F) from 100 ppm to 0.5% by weight, based on the total weight of A to E, of copper bromide or copper iodide or a mixture of these.

2. A molding composition as claimed in claim 1, where the polyarylene ether sulfones A comprise
a₁) from 0 to 100 mol% of recurring units 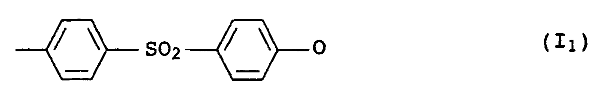 and
a₂) from 0 to 100 mol% of recurring units

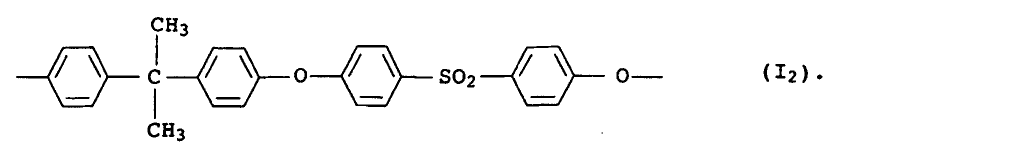

3. A molding composition as claimed in claim 1 or 2, in which A is a mixture made from at least one polyarylene ether sulfone (a1) having groups inert to the polyamides B and from at least one polyarylene ether sulfone (a2) containing functional groups which can react with the groups of the polyamides B.

4. A molding composition as claimed in claim 3, in which the functional groups of the polyarylene ether sulfones a2 are anhydride, carboxyl, epoxy or amino or a mixture of these.

5. A molding composition as claimed in any of claims 1 to 4, in which the polyamide B is polybutylene adipamide, polyhexamethylene adipamide or polycaprolactam or a mixture made from two or from all of these polyamides.

6. A process for preparing molding compositions as claimed in any of claims 1 to 5 by mixing the components followed by work-up, which comprises preparing a mixture made from components B and F in a first step and, in a second step, mixing this with the other components.

7. Use of the molding compositions as claimed in any of claims 1 to 5 for producing moldings.

8. A molding obtainable from the molding compositions as claimed in any of claims 1 to 5.

## Revendications

1. Masses de moulage contenant
A) au moins une polyarylèneéthersulfone,
B) au moins un polyamide aliphatique,
C) au moins une matière de remplissage,
ainsi qu'éventuellement, en outre,
D) un caoutchouc modifié quant à la résistance au choc ou un mélange de tels caoutchoucs différents,
E) un additif ou un mélange de différents additifs,
**caractérisées en ce que** les polyamides B présentent un indice de viscosité d'au moins 180 ml/g (mesuré dans une solution à 0,5% en poids dans de l'acide sulfurique à 96% en poids conformément à la norme DIN 53 727),
les masses de moulage contenant
F) 100 ppm à 0,5% en poids, par rapport au poids total de A à E, de bromure de cuivre ou d'iodure de cuivre ou de leurs mélanges.

2. Masses de moulage suivant la revendication 1, dans lesquelles les polyarylèneéthersulfones A contiennent
a₁) 0 à 100 moles % d'unités répétitives 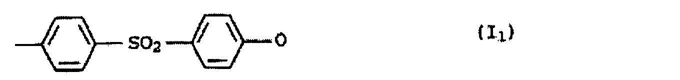 et
a₂) 0 à 100 moles % d'unités répétitives

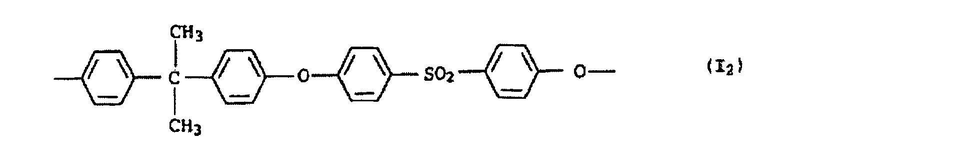

3. Masses de moulage suivant l'une des revendications 1 et 2, dans lesquelles A contient un mélange d'au moins une polyarylèneéthersulfone comportant des groupes qui se comportent de manière inerte par rapport aux polyamides B (a1) et d'au moins une polyarylèneéthersulfone qui contient des groupes fonctionnels qui peuvent réagir avec les groupes des polyamides B (a2).

4. Masses de moulage suivant la revendication 3, dans lesquelles les groupes fonctionnels des polyarylèneéthersulfones a2 sont des groupes anhydride, carboxyle, époxyde ou amino ou leurs mélanges.

5. Masses de moulage suivant l'une des revendications 1 à 4, dans lesquelles le polyamide B est un amide d'acide polybutylèneadipique, un amide d'acide polyhexaméthylèneadipique ou du polycaprolactame ou un mélange de deux ou de tous ces polyamides.

6. Procédé de préparation de masses de moulage suivant l'une des revendications 1 à 5, par mélange des composants et traitement ultérieur, **caractérisé en ce que**, dans une première étape, on prépare un mélange des composants B et F et **en ce qu'**on mélange celui-ci, dans une deuxième étape, avec les autres composants.

7. Utilisation des masses de moulage suivant l'une des revendications 1 à 5, pour la fabrication de pièces moulées.

8. Pièces moulées que l'on peut obtenir à partir des masses de moulage suivant l'une des revendications 1 à 5.
